# EUROPÄISCHE PATENTANMELDUNG

(11) **EP 0 899 180 A2**
(43) Veröffentlichungstag der Anmeldung: **03.03.1999**
(21) Anmeldenummer: 98111524.9
(22) Anmeldetag: 23.06.1998
(51) Int. Cl.: B62D 5/06

(54) **Vorrichtung zur Steuerung eines doppelt wirkenden Lenkzylinders**

(30) Priorität: 26.08.1997 DE 19737005
(71) Anmelder: CLAAS Selbstfahrende Erntemaschinen GmbH, 33428 Harsewinkel (DE)
(72) Erfinder: Strieker, Norbert, 3334 Gütersloh (DE); Dückinghaus, Heinz, 33649 Bielefeld (DE); Eis, Günter, 33428 Harsewinkel (DE)

(57) **Zusammenfassung**

Die Erfindung bezieht sich auf eine Vorrichtung zur Steuerung eines doppelt wirkenden Lenkzylinders von Fahrzeuglenkungen, insbesondere von landwirtschaftlichen Fahrzeuglenkungen mit zwei Arbeitsanschlüssen des Lenkzylinders, wobei die Arbeitsanschlüsse jeweils mittels einer Zulaufleitung oder einer Ablaufleitung mit einer Ventileinheit verbunden sind, dadurch gekennzeichnet, daß die Ventileinheit (21) zwei Schaltventile (1, 1') aufweist, die wechselweise jeweils in eine erste Schaltposition und in eine zweite Schaltposition bringbar sind, wobei der Lenkzylinder (6) in der ersten Schaltposition des ersten Schaltventils (1) mit einem Fluid an dem ersten Arbeitsanschluß (4) und in der zweiten Schaltposition des zweiten Schaltventils (1') mit dem Fluid an dem zweiten Arbeitsanschluß (5') beaufschlagt ist und vice versa.

## Beschreibung

Die Erfindung betrifft eine Vorrichtung zur Steuerung eines doppelt wirkenden Lenkzylinders von Fahrzeuglenkungen, insbesondere von landwirtschaftlichen Fahrzeuglenkungen, mit zwei Arbeitsanschlüssen des Lenkzylinders, wobei die Arbeitsanschlüsse jeweils mittels einer Zulaufleitung oder einer Ablaufleitung mit einer Ventileinheit verbunden sind.

Aus der DE 195 39 088 A1 ist eine gattungsgemäße Vorrichtung zur Steuerung eines doppelt wirkenden Lenkzylinders von Fahrzeuglenkungen bekannt, deren Ventileinheit zwei Proportionalventile aufweist. Mit der proportionalen Ansteuerung der Ventile läßt sich eine relativ genaue Verstellung eines Kolbens im Lenkzylinder verwirklichen. Nachteilig an der bekannten Vorrichtung ist jedoch, daß sie relativ langsam ist und die Maßnahmen zur Ansteuerung der Proportionalventile relativ aufwendig sind.

Es ist daher Aufgabe der Erfindung, eine Vorrichtung zur Steuerung eines doppelt wirkenden Lenkzylinders von Fahrzeuglenkungen zu schaffen, die über einen einfachen Aufbau verfügt und mit der eine schnelle Lenkrichtungsumkehrung im Lenkzylinder erzielt werden kann.

Zur Lösung dieser Aufgabe ist die Erfindung dadurch gekennzeichnet, daß die Ventileinheit zwei Schaltventile aufweist, die wechselweise jeweils in eine erste Schaltposition und in eine zweite Schaltposition bringbar sind, wobei der Lenkzylinder in der ersten Schaltposition des ersten Schaltventils mit einem Fluid an dem ersten Arbeitsanschluß und in der zweiten Schaltposition des zweiten Schaltventils mit dem Fluid an dem zweiten Arbeitsanschluß beaufschlagt ist und vice versa.

Der besondere Vorteil der Erfindung liegt darin, daß die Ventileinheit eine schnellere Umschaltung des Lenkzylinders ermöglicht. Dadurch, daß die Schaltventile jeweils nur zwei definierte Schaltstellungen einnehmen können, kann durch Kombination der beiden Schaltventile eine schnelle Richtungsumkehrung des in dem Lenkzylinder befindlichen Kolbens erzielt werden. Ferner wird der schaltungstechnische Aufbau zur Ansteuerung der Schaltventile reduziert, da jedes Schaltventil lediglich in zwei Schaltpositionen bringbar ist.

Nach einer besonderen Ausführungsform der Erfindung bestehen die Schaltventile jeweils aus einem 3/2-Wegeventil, die in einer Ventileinheit integriert sind. Vorteilhafterweise sind die 3/2-Wegeventile gleichartig ausgebildet.

Nach einer Weiterbildung der Erfindung werden die Schaltventile unabhängig voneinander elektromagnetisch betätigt, wobei der Elektromagnet mit einem elektrischen Stellsignal beaufschlagt wird. Nach einer Weiterbildung der Erfindung weist der Elektromagnet eine Vorerregung derart auf, daß das Schaltventil in der zweiten Schaltposition gerade noch den Druckanschluß desselben versperrt. In dieser Position beaufschlagt der Elektromagnet schon das Schaltventil, ohne es jedoch zu öffnen. Zum Versetzen des Schaltventils in seine erste Schaltposition reicht eine geringe Krafterhöhung des Elektromagneten aus, so daß im Ergebnis eine schnelle Umschaltung des Schaltventils von der zweiten in die erste Schaltposition und umgekehrt ermöglicht wird.

Nach einer Ausgestaltung der Erfindung sind die Schaltventile jeweils als Schiebersitzventile ausgebildet, wobei in der zweiten Schaltposition des Schaltventils eine federbelastete Kugel in einem Ventilsitz angeordnet ist. Durch Verschiebung dieser Kugel mittels eines Ventilstößels kann das Ventil schnell in eine den Druckanschluß öffnende erste Schaltposition gebracht werden. Durch den Kugelsitz wird vorteilhaft eine Leckölfreiheit des Speichers ermöglicht.

Nach einer Weiterbildung der Erfindung ist das Ventilstößel einteilig mit einem Schieber verbunden, der derart umfangseitig des Ventilstößels angeordnet ist, daß bei Betätigen des Schaltventils die Zulauf- und Ablaufleitung des Schaltventils kurzzeitig gesperrt sind.

Ein Ausführungsbeispiel der Erfindung wird nachfolgend anhand der Zeichnungen näher erläutert.

Es zeigen:
- Figur 1:: ein Blockschaltbild einer erfindungsgemäßen Vorrichtung und
- Figur 2: ein schematischer Aufbau einer Ventileinheit.

Die erfindungnsgemäße Vorrichtung wird zur Selbstlenkung eines landwirtschaftlichen Fahrzeugs, beispielsweise eines Mähdreschers oder eines Häckslers, verwendet. Dabei wird in Abhängigkeit von einem vorgegebenen Sollwert ein Lenkzylinder einer Lenkung derart beaufschlagt, daß auch bei Auftreten von Störgrößen der Kolben im Lenkzylinder eine solche Position einnimmt, daß das Fahrzeug die gewünschte Fahrtrichtung beibehält. Die Steuerung der im folgenden beschriebenen Ventile erfolgt über eine Regeleinrichtung, die ein Stellsignal erzeugt in Abhängigkeit von der vorgegebenen Sollage, der aktuellen Istlage des Fahrzeugs sowie ggfs. in Abhängigkeit von auf das System wirkenden Störgrößen.

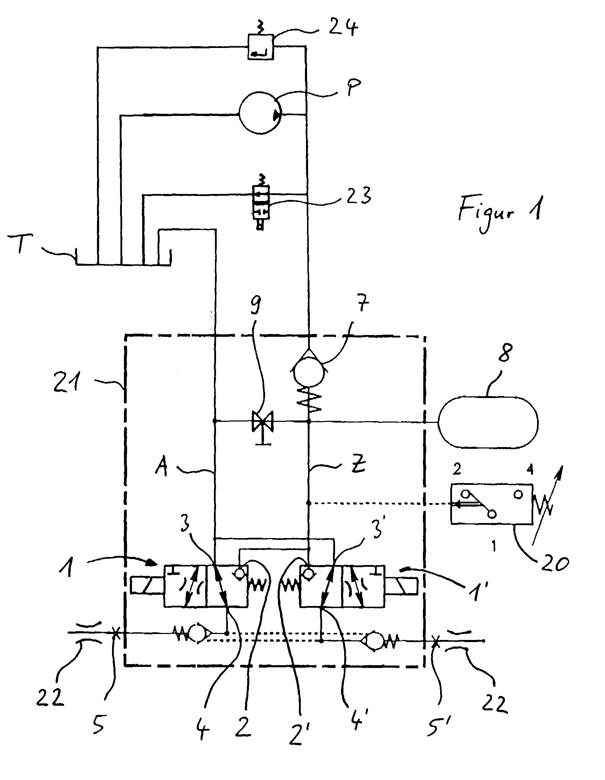

Figur 1 zeigt ein Blockschaltbild der erfindungsgemäßen Vorrichtung, in der zwei Schaltventile 1 und 1' vorgesehen sind, die unabhängig voneinander ansteuerbar sind. Die Schaltventile 1, 1' sind jeweils als 3/2-Wegeventile ausgebildet, die jeweils über ein Stellsignal elektromagnetisch betätigbar sind. Eine nicht dargestellte Steuereinheit liefert die Stellsignale derart, daß die Schaltventile 1, 1' jeweils in eine erste Schaltposition und in eine zweite Schaltposition bringbar sind.

In der in Figur 1 dargestellten Schaltstellung befinden sich die Schaltventile 1, 1' jeweils in einer zweiten Schaltposition. In dieser Schaltposition der Schaltventile 1, 1' ist ein Druckanschluß 2, 2' der Schaltventile 1 bzw. 1' gesperrt. Ein Rücklaufanschluß 3, 3' der Schaltventile 1, 1' ist über eine Ablaufleitung A mit einem Tank T verbunden, ein Arbeitsanschluß 4 und 4' der Schaltventile 1, bzw. 1' ist jeweils mit einem ersten Arbeitsanschluß 5 bzw. einem zweiten Arbeitsanschluß 5' eines Lenkzylinders 6 verbunden.

Die Druckanschlüsse 2, 2' der Schaltventile 1, 1' sind jeweils über eine gemeinsame Zuführleitung Z zum einen über ein Rückschlagventil 7 mit einer Pumpe P und zum anderen mit einem Speicher 8 verbunden. Zwischen der Zulaufleitung Z und der Ablaufleitung A ist ein Wartungsventil 9 angeordnet, das bei Betrieb der Lenkung sich in Sperrpositon befindet und nur zu Wartungszwecken geöffnet wird, so daß der Speicher 8 entleert werden kann.

Soll ein Kolben 10 des Lenkzylinders 6 um einen bestimmten Weg in eine vorgegebene Richtung bewegt werden, wird beispielweise das Schaltventil 1, das zu dem Arbeitsanschluß 5 des Lenkzylinders 6 korrespondiert, durch ein Stellsignal beaufschlagt und in eine erste Schaltposition gebracht. Der Druckanschluß 2 ist nunmehr über die Zulaufleitung Z mit dem Speicher bzw. der Pumpe P verbunden und der Arbeitsanschluß 4 ist mit dem Arbeitsanschluß 5 des Zylinders 6 verbunden. Der Rücklaufanschluß 3 ist gesperrt. Das Hydraulikfluid kann nun von dem Speicher 8 bzw. der Pumpe P über das Schaltventil 1 zu dem Arbeitsanschluß 5 des Zylinders 6 fließen. Über den Arbeitsanschluß 5' fließt das Hydraulikfluid drucklos von dem Lenkzylinder 6 zu dem Arbeitsanschluß 4' des in einer zweiten Schaltposition befindlichen Schaltventils 1' und von diesem über den Rücklaufanschluß 3' zu dem Tank T.

Soll der Kolben 10 des Lenkzylinders 6 in entgegengesetzte Richtung verfahren werden, werden gleichzeitig das Schaltventil 1 in die zweite Schaltposition und das Schaltventil 1' in die erste Schaltposition gebracht. In Abhängigkeit von der vorgegebenen Bewegungsrichtung des Kolbens 10 ist jeweils ein Schaltventil 1, 1' über den Druckanschluß 2, 2' mit dem Speicher 8 einerseits und das andere Schaltventil 1, 1' über den Rücklaufanschluß 3, 3' mit dem Tank T andererseits verbunden. In der druckbeaufschlagten ersten Schaltposition der Schaltventile 1, 1' weisen dieselben Blenden auf. Auch zwischen den Arbeitsanschlüssen 4, 4' und dem Lenkzylinder 6 sind Blenden 22 angeordnet zur Anpassung auf die jeweiligen Lenkeigenschaften des Fahrzeugs.

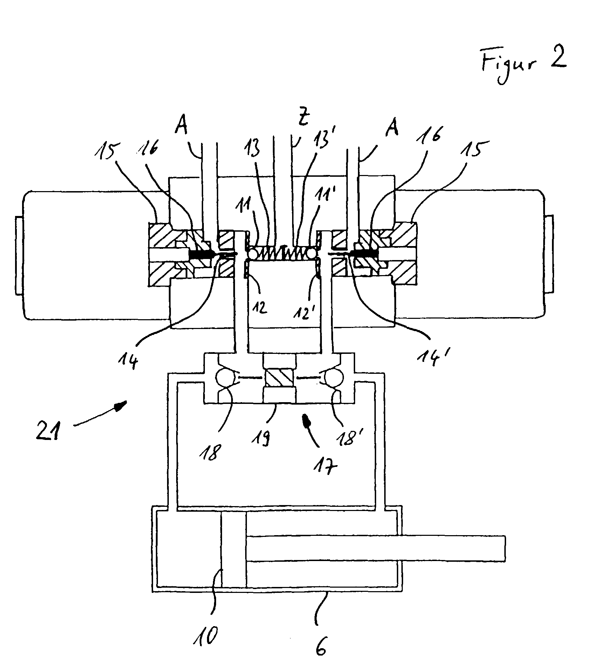

Wie aus Figur 2 zu ersehen ist, sind die Schaltventile 1, 1' gleichförmig ausgebildet und koaxial zueinander angeordnet. Die Schaltventile 1, 1' sind als Schiebersitzschaltventile ausgebildet, wobei eine Kugel 11, 11' auf einem Ventilsitz 12, 12' mittels einer Feder 13, 13' gedrückt wird. Durch Betätigen eines Ventilstößels 14, 14' mittels eines Elektromagneten 15, 15' wird die Kugel 11, 11' aus dem Ventilsitz 12, 12' gedrückt, so daß sich das Schaltventil 1, 1' nunmehr in der ersten Schaltposition befindet. Bei dieser Umschaltung wird mit Bewegung des Ventilstößels 14 ein mit diesem einstückig verbundener Schieber 16, 16' mitbewegt, wobei der Schieber 16, 16' bereits vor Anheben der Kugel 11, 11' aus dem Ventilsitz 12, 12' die Ablaufleitung A sperrt. Dies ermöglicht eine positive Schaltüberdeckung, wobei ein Ölverlust des relativ kleinen Speichers 8 und ein kurzzeitiger Druckabfall während der Umschaltung vermieden wird.

Durch die Ausbildung der Schaltventile 1, 1' als Kugelsitzventile wird ein schnelles Ansprechen der Ventile und somit eine schnelle Umschaltung ermöglicht. Darüberhinaus ist der Speicher 8 über den Druckanschluß 2, 2' der Ventile 1, 1' leckölfrei abgedichtet. Der Durchmesser des Ventilsitzes 12, 12' ist derart klein bemessen, daß bei ausreichendem Volumenstrom eine vergleichsweise geringe Kraft zum Umschalten des Ventils 1, 1' erforderlich ist. Eine weitere Verkürzung der Schaltzeit wird dadurch erzielt, daß der Elektromagnet 15, 15' vorerregt ist, das heißt schon mit einem elektrischen Strom gespeist wird, der so groß ist, daß in der zweiten Schaltposition des Ventils 1, 1' die Kugel 11, 11' gerade noch nicht aus dem Ventilsitz 12, 12' herausgedrückt wird. Bei Umschaltung in die erste Schaltposition ist nunmehr nur eine geringe Krafterhöhung erforderlich, um die Kugel 11, 11' aus dem Ventilsitz 12, 12' herauszudrücken.

Ferner weist eine Ventileinheit 21 einen Sperrblock 17 auf, der zwei Rückschlagventile 18, 18' aufweist, die bei Betrieb der erfindungsgemäßen Vorrichtung die Leitungen öffnen und bei Nichtbetrieb der Vorrichtung die Zuleitungen zu dem Lenkzylinder 6 sicher sperren. Dieser Sperrblock 17 ist erforderlich, weil die Ventileinheit 21 Bestandteil eines gesonderten Arbeitshydraulikkreises ist, der im Selbstlenkungsbetrieb von einem für den normalen Betrieb der Lenkung vorgesehenen Lenkhydraulikkreis getrennt ist. Der gesonderte Arbeitshydraulikkreislauf dient ferner zur Steuerung von anderen Funktionen, beispielsweise zum Schneidwerkheben etc.. Damit in der Betriebsstellung der Ventileinheit 21 die Öffnung der beiden zu dem Lenkzylinder 6 hinführenden Leitungen gewährleistet ist, wird das der drucklosen Leitung zugeordnete Rückschlagventil 18, 18' mittels eines Kolbens 19 in die Öffnungsstellung gebracht. Die Ansteuerung des Kolbens 19 erfolgt durch den druckbeaufschlagten Arbeitsanschluß 4, 4' des entsprechenden Schaltventils 1, 1'.

Ein elektrischer Druckschalter 20 steht in Wirkverbindung mit einem 2/2 Wegeventil 23, so daß bei Unterschreitung eines Mindestdrucks des Speichers 8 dieser wieder aufgefüllt werden kann. Nach Abschalten des Wegeventils 23 wird der Speicherdruck durch das Rückschlagventil 7 gehalten. Ein Druckbegrenzungsventil 24 schützt den Hydraulikkreis vor der Überlastung.

Wie aus Figur 2 zu ersehen ist, sind die Schaltventile 1, 1' als Zwillingsventile ausgebildet, die unmittelbar aneinanderliegen und eine gemeinsame Zulaufleitung Z aufweisen. Dadurch, daß die Ventileinheit 21 bezüglich einer Mittelachse symmetrisch aufgebaut ist, können für die Schaltventile 1, 1' die gleichen Bauteile verwendet werden. Die Beaufschlagung der Schaltventile 1, 1' kann in gleicher Höhe erfolgen, da für die Bauteile die gleichen Dimensionen gewählt worden sind. Die Ventileinheit 21 ermöglicht eine schnelle Umschaltung der Ventile, wobei insbesondere kleine Lenkwinkel auf diese Weise schnell ausgeglichen werden können. Insbesondere wird hierdurch bei einer Hinterradlenkung die Gefahr des Übersteuerns verringert. Hierdurch kann eine höhere Geschwindigkeit bzw. eine höhere Einsatzleistung des Fahrzeugs erzielt werden, so daß sich die Ernteleistung erhöht.

## Patentansprüche

1. Vorrichtung zur Steuerung eines doppelt wirkenden Lenkzylinders von Fahrzeuglenkungen, insbesondere von landwirtschaftlichen Fahrzeuglenkungen mit zwei Arbeitsanschlüssen des Lenkzylinders, wobei die Arbeitsanschlüsse jeweils mittels einer Zulaufleitung oder einer Ablaufleitung mit einer Ventileinheit verbunden sind, dadurch gekennzeichnet, daß die Ventileinheit (21) zwei Schaltventile (1, 1') aufweist, die wechselweise jeweils in eine erste Schaltposition und in eine zweite Schaltposition bringbar sind, wobei der Lenkzylinder (6) in der ersten Schaltposition des ersten Schaltventils (1) mit einem Fluid an dem ersten Arbeitsanschluß (4) und in der zweiten Schaltposition des zweiten Schaltventils (1') mit dem Fluid an dem zweiten Arbeitsanschluß (5') beaufschlagt ist und vice versa.

2. Vorrichtung nach Anspruch 1, dadurch gekennzeichnet, daß die Schaltventile (1, 1') jeweils als 3/2-Wegeventile ausgebildet sind, und in der Ventileinheit (21) integriert sind.

3. Vorrichtung nach Anspruch 1 oder 2, dadurch gekennzeichnet, daß die Schaltventile (1, 1') elektromagnetisch betätigbar sind.

4. Vorrichtung nach Anspruch 3, dadurch gekennzeichnet, daß ein dem Schaltventil (1, 1') zugeordneter Elektromagnet (15, 15') zur elektromagnetischen Beaufschlagung des Schaltventils (1, 1') in der zweiten Schaltposition des Schaltventils (1, 1') eine Vorerregung aufweist.

5. Vorrichtung nach einem der Ansprüche 1 bis 4, dadurch gekennzeichnet, daß die Schaltventile (1, 1') als Zwillingsventile ausgebildet sind, die koaxial zueinander angeordnet sind.

6. Vorrichtung nach Anspruch 5, dadurch gekennzeichnet, daß Druckanschlüsse (2, 2') der Schaltventile (1, 1') unmittelbar an einer gemeinsamen druckbeaufschlagten Zulaufleitung (Z) angeschlossen sind.

7. Vorrichtung nach einem der Ansprüche 1 bis 6, dadurch gekennzeichnet, daß das Schaltventil (1, 1') als Schiebersitzventil ausgebildet ist, wobei ein Druckanschluß (2, 2') durch mittels eines Ventilstößels (14, 14') bewirkten Anhebung einer Kugel (11, 11') aus einem Ventilsitz (12, 12') geöffnet werden kann und der Ventilstößel (14, 14') einen Schieber (16, 16') aufweist zum Verschließen eines Rücklaufanschlusses (3, 3').

8. Vorrichtung nach Anspruch 7, dadurch gekennzeichnet, daß der Schieber (16, 16') einstückig mit dem Ventilstößel (14, 14') verbunden ist und umfangseitig des Ventilstößels (14, 14') derart in einem Bereich desselben angeordnet ist, daß bei Betätigen des Schaltventils (1, 1') die Zulaufleitung (Z) und die Ablaufleitung (A) kurzzeitig gesperrt sind.

9. Vorrichtung nach einem der Ansprüche 1 bis 8, dadurch gekennzeichnet, daß der Ventilsitz (12) einen derart kleinen Durchmesser aufweist, daß eine geringe Schaltkraft zur Anhebung der Kugel (11, 11') aus dem Ventilsitz (12, 12') durch den Elektromagneten (15, 15') aufbringbar ist.
